# EUROPÄISCHE PATENTANMELDUNG

(11) **EP 3 508 690 A1**
(43) Veröffentlichungstag der Anmeldung: **10.07.2019**
(21) Anmeldenummer: 18150689.0
(22) Anmeldetag: 09.01.2018
(51) Int. Cl.: F01D 5/18, B22F 5/04

(54) **TURBINENSCHAUFELBLATT, TURBINENSCHAUFEL UND VERFAHREN ZU DEREN HERSTELLUNG**

(71) Anmelder: Siemens Aktiengesellschaft, 80333 München (DE)
(72) Erfinder: Brunhuber, Christian, 91275 Auerbach (DE)

(57) **Zusammenfassung**

Es wird ein Turbinenschaufelblatt (20) angegeben, welches eine sich entlang einer Längsachse (LA) einer Turbinenschaufel (100) von einem radial inneren Bereich bis zu einem radial äußeren Bereich der Turbinenschaufel erstreckt, wobei das Schaufelblatt (20) weiterhin eine Außenwand (AW) und eine innerhalb der Außenwand angeordnete Innenwand (IW) aufweist und wobei das Schaufelblatt (20) in einem zentralen Abschnitt frei von strukturellen Verbindungen zwischen der Außenwand (AW) und der Innenwand (IW) ist, und wobei die Turbinenschaufel (100) an einer Schaufelspitze (30) an dem radial äußeren Bereich einwandig ausgestaltet ist. Weiterhin wird eine Turbinenschaufel und ein entsprechendes Herstellungsverfahren beschrieben.

## Beschreibung

Die vorliegende Erfindung betrifft ein Turbinenschaufelblatt und eine entsprechende Turbinenschaufel, vorzugsweise eine fluidgekühlte Turbinenschaufel und ein Verfahren zu deren Herstellung. Das Schaufelblatt der Turbinenschaufel wird vorzugsweise durch ein additives Herstellungsverfahren aufgebaut oder hergestellt.

Die Turbinenschaufel ist vorzugsweise für den Einsatz in einer Strömungsmaschine, vorzugsweise im Heißgaspfad einer Gasturbine, vorgesehen. Das Bauteil besteht vorzugsweise zumindest hauptsächlich aus einer Superlegierung, insbesondere einer nickel- oder kobaltbasierten Superlegierung. Die Legierung kann ausscheidungs- oder dispersionsgehärtet sein.

Generative oder additive Herstellungsverfahren umfassen beispielsweise als Pulverbettverfahren das selektive Laserschmelzen (SLM) oder Lasersintern (SLS), oder das Elektronenstrahlschmelzen (EBM).

Ein Verfahren zum selektiven Laserschmelzen ist beispielsweise bekannt aus EP 2 601 006 B1.

Additive Fertigungsverfahren (englisch: "additive manufacturing") haben sich als besonders vorteilhaft für komplexe oder filigran designte Bauteile, beispielsweise labyrinthartige Strukturen, wie Kühlstrukturen erwiesen.

Um effiziente Gasturbinen herzustellen, ist es unabdingbar, thermische und/oder mechanisch hochbelastete Bauteile wie Lauf- oder Leitschaufeln oder weitere Komponenten wie Ringsegmente, Hitzeschilde oder Brennerteile effizient, beispielsweise mit komprimierter Luft, zu kühlen. Aufgrund der Gestaltungsfreiheit von additiven Fertigungsprozessen, ist in den letzten Jahren die additive Fertigung auch für den Aufbau von Turbinenschaufeln in den Fokus gerückt, da mit diesen Verfahren neuartige, mittels konventioneller Herstellung nicht realisierbare, Geometrien, wie beispielsweise Gitter oder Verzweigungen erzeugt werden können. Im Bereich der additiven Fertigung befassen sich aktuelle Entwicklungsarbeiten auch mit der Verarbeitung (Verschweißen) "schwer schweißbarer" Nickelbasislegierungen oder potenziell (noch) nicht schweißbarer Nickelbasislegierungen für den schnellen Aufbau von Prototypen, Reparaturanwendungen, und zunehmend auch für eine Serienherstellung von Bauteilen.

Ein vielversprechendes additives Fertigungsverfahren für hochtemperaturfeste, schwer schweißbare Nickelbasiswerkstoffe ist - aufgrund der möglichen Prozesstemperaturen von zum Beispiel über 1000 °C - das Elektronenstrahlschmelzen. Beim Elektronenstrahlschmelzen ist eine hohe Prozesstemperatur erforderlich, damit das Metallpulver (Basismaterial) im Bauraum "zusammenbackt" oder zumindest teilweise versintert und auf diese Weise fixiert wird. Erfolgt diese (Vor)sinterung nicht, besteht die Gefahr, dass sich das Rohstoffpulver während des Elektronenstrahlschmelzens aufgrund der elektrostatischen Aufladung plötzlich im gesamten Bauchraum verteilt (Smokeffekt).

Eine technische Schwierigkeit besteht darin, dass beim Aufbau einer Gasturbinenschaufel, eine relativ komplexe innere Geometrie vorliegt (Kühlgeometrie) und eine Entfernung von bereits im Innenraum oder Kühlkanal gesintertem Pulver durch die oft kleinen Fluideintritts- oder Austrittsöffnungen am Fuß der Schaufel oder an den Strömungskanten nicht möglich ist.

Das Problem der Pulverentfernung, wie es heute beim Elektronenstrahlschmelzen (EBM) bekannt ist, ist auch beim selektiven Laserschmelzen (SLM) zu erwarten, insbesondere dann, wenn es ebenfalls um den Aufbau schwer schweißbarer Werkstoffe und die Beteiligung hoher Temperaturen geht. Es gibt nämlich beim SLM ebenfalls Bestrebungen, mittels induktiver, resistiver und/oder radiativer Heizung, besonders hohe Temperaturen von beispielsweise über 1000 °C anzuwenden, beispielsweise zum Vorheizen.

Das angesprochene Problem der Pulverentfernung im Anschluss an einen additiven Hochtemperatur-Aufbauprozess stellt aktuell eine sehr große Herausforderung dar, so dass im Stand der Technik von Turbinenschaufeln bisher nur Anwendungen bekannt sind, bei denen Schaufeln ohne innere Struktur hergestellt werden, zum Beispiel Aeroturbinen für Luftfahrtanwendungen, welche Titan und/oder Aluminiummaterialsysteme betreffen. In diesem Fall stellt das Entfernen des Pulvers kein Problem dar und kann ohne weiteres erfolgen, beispielsweise mittels Ausblasen oder Sandstrahlen und ohne die Anwendung spezieller Werkzeuge.

Es ist daher eine Aufgabe der vorliegenden Erfindung, Mittel anzugeben, insbesondere ein Design für eine Turbinenschaufel oder ein Schaufelblatt, das sowohl eine effiziente Kühlung erlaubt, wobei die Kühlluft nah an der Außenwand im Inneren der Schaufel geführt werden kann ("near wall cooling"), als auch relativ einfach mittels Elektronenstrahlschmelzens oder Laserauftragschweißens gefertigt werden kann. Das Fertigen schließt hier insbesondere eine problemlose "Entpulverung" oder Entfernung von überschüssigem Basismaterial aus einem Inneren des Schaufelblatts mit ein.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft ein Turbinenschaufelblatt für eine Turbinenschaufel, wobei sich das Schaufelblatt entlang einer Längsachse der Turbinenschaufel von einem radial inneren Bereich bis zu einem radial äußeren Bereich der Turbinenschaufel erstreckt, wobei das Schaufelblatt weiterhin eine Außenwand und eine innerhalb der Außenwand angeordnete Innenwand aufweist, und wobei das Schaufelblatt in einem zentralen Abschnitt frei von strukturellen Verbindungen zwischen der Außenwand und der Innenwand ist. Der zentrale Abschnitt bzw. das Schaufelblatt wird vorzugsweise mittels eines selektiven pulverbett-basierten additiven Verfahrens hergestellt.

Die Abwesenheit dieser strukturellen Verbindungen erlaubt mit Vorteil die Pulverentfernung aus einem entsprechenden Hohl- oder Innenraum zwischen der Innenwand und der Außenwand, welcher für die Kühlung der Turbinenschaufel im Betrieb, insbesondere durch ein Kühlfluid wie Kompressorluft, durchströmt werden kann. Mit anderen Worten sind in der Mittelsektion keine Verbindungen zwischen der Außenwand und der Innenwand vorhanden. Als weiteren Vorteil wird bei dem vorgestellten Design der Turbinenschaufel verhindert, dass die hohen Temperaturunterschiede zwischen den Wanderungen (Außenwand und Innenwand) große mechanische, insbesondere thermomechanische, Spannungen verursachen, welche wiederum zu Rissen führen können. Durch das vorgeschlagene Design wird es sogar überhaupt erst ermöglicht, Turbinenschaufeln aus einem Material mit hohem Mischkristall-, Ausscheidungs- oder γ'-Anteil, additiv zu fertigen, da hohe Temperaturen für den Schweißprozess erforderlich sind und weiterhin die Funktonalität der Kühlkanäle zwischen Innenwand und Außenwand, insbesondere die Durchströmbarkeit mit einem Kühlfluid während des Betriebs der Turbinenschaufel nur durch vollständige nachträgliche Entfernung von Überschusspulver gewährleistet werden kann.

In einer Ausgestaltung ist die Turbinenschaufel an einer Schaufelspitze an dem radial äußeren Bereich weiterhin einwandig ausgestaltet. Mit anderen Worten ist an der Schaufelspitze also gerade keine Innenwand vorhanden, was weiterhin die Herstellung der Schaufelspitze als auch die Entpulverung des zentralen Abschnitts nach dem Aufbau vereinfacht.

Die Schaufelspitze wird vorzugsweise mittels Laserauftragschweißens im Anschluss an den additiven Aufbau des zentralen Abschnitts aufgebaut.

In einer Ausgestaltung definieren die Innenwand und die Außenwand einen Strömungskanal, um insbesondere eine Oberfläche des Schaufelblatts im Betrieb der Turbinenschaufel zu kühlen.

In einer Ausgestaltung ist das Schaufelblatt durch ein additives Herstellungsverfahren, beispielsweise selektives Laserschmelzens oder Elektronenstrahlschmelzen herstellbar oder hergestellt.

In einer Ausgestaltung ist der Strömungskanal weiterhin derart ausgebildet, dass eine Entfernung eines Pulvers oder Basismaterials aus einem Zwischenraum oder Hohlraum zwischen der Innenwand und der Außenwand (wie oben beschrieben) beispielsweise ohne Weiteres also ohne Zusatzwerkzeuge, welche ansonsten insbesondere aufgrund der Geometrie des zentralen Bereichs des Schaufelblatts herangezogen werden müssten, möglich ist.

In einer Ausgestaltung beträgt ein Abstand zwischen der Innenwand der Außenwand zwischen 2 mm und 25 mm.

In einer Ausgestaltung beträgt der Abstand zwischen der Innenwand der Außenwand zwischen 5 und 10 % der Länge (entlang der Längsachse gemessen) des zentralen Abschnitts der Turbinenschaufel.

Als Vorteil dieser Ausgestaltungen kann für eine Vielzahl von Turbinenschaufeln ein relativ schmaler Kühlstrom im Betrieb der Schaufel ausgebildet werden, welcher zu einer entsprechend großen Strömungsgeschwindigkeit führt. Eine größere Strömungsgeschwindigkeit ist (im Vergleich zu einer kleineren) vorteilhaft, da diese bei im Übrigen gleichen Randbedingungen turbulenter ist, und somit eine bessere Kühlleistung erreicht werden kann. Der Abstand soll zwar relativ klein gewählt werden, vorzugsweise aber nicht so klein, dass im Betrieb ein zwangsläufig auftretendes Verformen durch mechanische Belastungen, insbesondere der Außenwand, zu einem Kontakt zwischen den Wänden führt. Die Tatsache, dass sich mit dieser vorgestellten Geometrie die Außenwand ungestört Verformen kann, ist im Übrigen ein weiterer Vorteil des beschriebenen Designs.

In einer Ausgestaltung wird die Innenwand in dem zentralen Abschnitt der Turbinenschaufel durch eine Gitterstruktur, insbesondere mechanisch und/oder strukturell, gestützt. Durch das Gitter wird ermöglicht, dass ein Kühlmassenstrom im Betrieb der Schaufel vorteilhafterweise von innen zu den Kühlluftbohrungen an einer Vorder- und einer Hinterkante der Turbinenschaufel nicht behindert wird.

In einer Ausgestaltung definiert die Gitterstruktur Öffnungen oder Hohlräume, welche während eines Betriebs der Turbinenschaufel für die Kühlströmung zweckmäßigerweise durchlässig ausgebildet sind.

In einer Ausgestaltung ist die Gitterstruktur derart ausgebildet, dass eine Kühlströmung während des Betriebs der Turbinenschaufel in eine Mehrzahl von, insbesondere voneinander fluidisch getrennten, Teilströmungen aufgeteilt wird. Durch diese Ausgestaltung kann ein Kühlluftstrom vorteilhafterweise durch das Design des Gitters, beispielsweise je nach lokalem Kühlbedarf entlang der Längsachse, maßgeschneidert werden.

In einer Ausgestaltung weisen die Öffnungen Abmessungen, insbesondere Durchmesser, von mindestens 5 mm auf, insbesondere um eine Entpulverung nach dem additiven Aufbau des Schaufelblatts zu ermöglichen. Ein derart grobes oder grob maschiges Gitter stellt bezüglich der Entfernung des Basismaterials oder Pulvers aus dem Zwischenraum kein großes Problem dar, und kann beispielsweise mechanisch durch Ausblasen oder einfache Hilfsmittel erfolgen.

In einer Ausgestaltung ist der zentrale Abschnitt des Schaufelblatts zwischen einer Strömungs-Vorderkante oder Anströmkante und einer Strömungs-Hinterkante oder Abströmkante desselben angeordnet, wobei die Innenwand und die Außenwand an der Strömungs-Vorderkante und oder der Strömungs-Hinterkante zumindest teilweise strukturell verbunden sind. Der zentrale Abschnitt stellt also beispielsweise einen "Querabschnitt" oder einen Abschnitt entlang eines Querschnitts der Turbinenschaufel dar (von Vorder- zu Hinterkante betrachtet), wobei Schaufelblattbereiche der Vorderkante und der Hinterkante ausgenommen sind. Bis auf die Kanten ist das Schaufelblatt an seinen Hauptoberflächen gemäß der obigen Beschreibung jedenfalls frei von strukturellen Verbindungen zwischen Innenwand und Außenwand.

Die strukturelle Verbindung von Außenwand und Innenwand an Vorder- und/oder Hinterkante kann insbesondere vorteilhaft sein, um weitere Kühlkammern zur Kühlung von Vorder- und Hinterkante zu bilden, welche im Betrieb der Schaufel, insbesondere thermisch und/oder mechanisch besonders hoch belastet sind.

In einer Ausgestaltung weist eine Innenseite der Außenwand Turbulenz- bzw. Vortexgeneratoren (Turbulatoren) auf, welche im Vergleich zum Abstand der Außenwand zur Innenwand vorzugsweise klein ausgebildet sind.

In einer Ausgestaltung weist eine Strömungs-Hinterkante, insbesondere augenförmige, Turbulenz- oder Vortexeneratoren auf. Da bei den beschriebenen Schaufeln die Hinterkante üblicherweise relativ spitz zuläuft und im Inneren Turbulatoren angebracht sind, stellt der Aufbau dieses Bereichs eine große Herausforderung bezüglich der Entfernung des Pulvers dar. Die augenförmigen Turbulatoren werden insbesondere relativ zur Strömungsrichtung parallel und/oder orthogonal ausgerichtet (siehe unten), sodass das während des additiven Aufbaus durch SLM oder EBM gesinterte oder angebackene Pulver mit einem dünnen Werkzeug beispielsweise von der Schaufelspitze oder den Kühlluftbohrungen aus gelockert und entsprechend mechanisch entfernt werden kann.

Ein weiterer Aspekt der vorliegenden Erfindung betrifft eine Turbinenschaufel, umfassend das Schaufelblatt und einen Schaufelfuß, welcher das Schaufelblatt trägt, also vorzugsweise stoffschlüssig mit diesem verbunden ist, wobei der Schaufelfuß durch konventionelle Verfahren, beispielsweise Schmiede- oder Gussverfahren hergestellt ist. Der Schaufelfuß ist insbesondere für die additive Fertigung nicht geeignet, da er keine komplexe Geometrie aufweist und außerdem den Aufbau von viel Volumenmaterial erfordert.

In einer Ausgestaltung ist die Schaufelspitze bzw. deren Wand mittels Laserauftragschweißens, insbesondere aus einem Material, welches im Vergleich zu dem Schaufelblattmaterial eine höhere Oxidationsstabilität aufweist, hergestellt. Durch den Wechsel des Aufbauverfahrens beispielsweise von selektiven Pulverbett-Verfahren zum Laserauftragschweißen kann ohne weiteres auch die Materialklasse geändert und so entsprechende lokal variierende Eigenschaften realisiert werden, im vorliegenden Fall beispielsweise eine im Vergleich zum Schaufelblatt verbesserte Oxidationsbeständigkeit an der Schaufelspitze.

Ein weiterer Aspekt der vorliegenden Offenbarung betrifft ein Verfahren zur Herstellung der Turbinenschaufel, wobei ein Schaufelfuß der Turbinenschaufel mittels eines konventionellen Verfahrens hergestellt wird, das Schaufelblatt mittels eines additiven Verfahrens, beispielsweise selektiven Laserschmelzens oder Elektronenstrahlschmelzens hergestellt wird, und die Schaufelspitze mittels Laserauftragschweißens hergestellt wird, wie oben beschrieben.

Ausgestaltungen, Merkmale und/oder Vorteile, die sich vorliegend auf das Schaufelblatt oder die Turbinenschaufel bzw. ihr Design beziehen, können ferner das entsprechende Herstellungsverfahren betreffen oder umgekehrt.

Weitere Einzelheiten der Erfindung werden nachfolgend anhand der Figuren beschrieben.
- Figur 1: zeigt einen schematischen Längsschnitt einer Turbinenschaufel gemäß der vorliegenden Erfindung.
- Figur 2: zeigt eine schematische perspektivische Ansicht eines Teils der Turbinenschaufel aus Figur 1.
- Figur 3: zeigt ein schematisches Flussdiagramm, welches erfindungsgemäß Verfahrensschritte andeutet.
- Figur 4: deutet schematisch anhand einer Seiten- oder Schnittansicht einen Schaufelblattabschnitt an, welcher durch ein additives selektives Schmelz- oder Schweißverfahren hergestellt wird.

In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

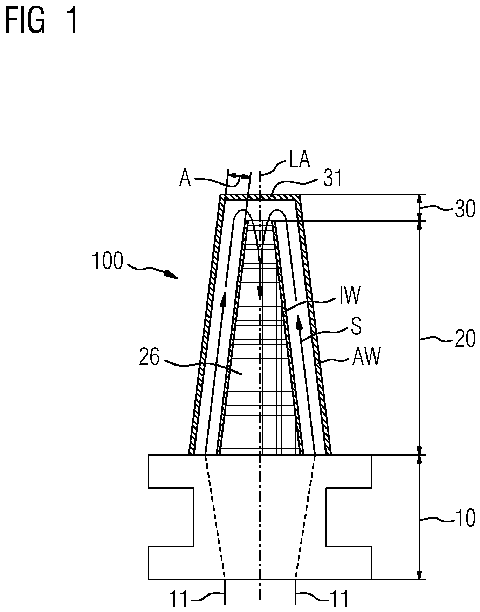

Figur 1 zeigt eine Turbinenschaufel 100, anhand eines beispielhaften Längsschnitts (siehe unten). Die Turbinenschaufel 100 weist einen Schaufelfuß 10 auf. Die Turbinenschaufel 100 weist weiterhin ein Schaufelblatt 20 auf. Das Schaufelblatt 20 ist vorzugsweise auf dem Schaufelfuß 10 angeordnet, mit diesem verbunden oder wird von diesem getragen.

Die Turbinenschaufel 100 weist weiterhin eine Schaufelspitze 30 auf.

Der Schaufelfuß 10 ist vorzugsweise mittels eines konventionellen Fertigungsverfahrens, beispielsweise Schmiedens und/oder Gießens, hergestellt. Der Schaufelfuß 10 kann zweckmäßigerweise abgebildete, aber nicht explizit gekennzeichnete Ausnehmungen aufweisen, beispielsweise, um die Turbinenschaufel 100 an einer Turbinenscheibe oder an einem Rotorteil der Turbine (ebenfalls nicht explizit gekennzeichnet) lösbar zu befestigen.

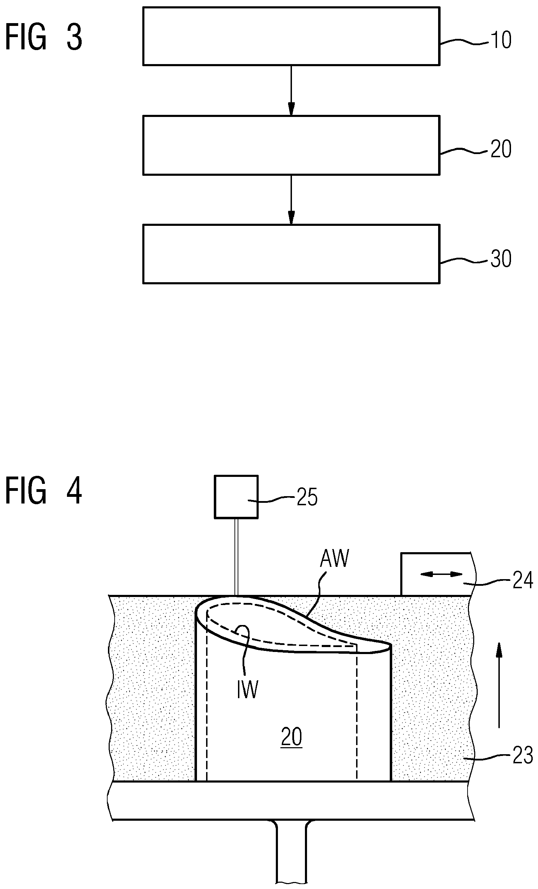

Das Schaufelblatt 20 hingegen ist vorzugsweise durch ein additives Herstellungsverfahren, beispielsweise selektives Laserschmelzen oder Elektronenstrahlschmelzen aus einem Pulverbett (separat) hergestellt worden (vergleiche Figur 4 weiter unten). Dazu wird das Schaufelblatt 20 entweder nach dem additiven Aufbau an den Schaufelfuß gefügt oder, vorzugsweise, im Rahmen eines Hybrid-Prozesses direkt auf dem Schaufelfuß, welcher als Substrat fungiert, aufgebaut.

Das Schaufelblatt 20 weist eine Längsachse LA auf. Die Längsachse LA erstreckt sich vorzugsweise von einem radial innen liegenden Bereich (in der Nähe des Schaufelfußes 10) zu einem radial außen liegenden Bereich (in der Nähe der Schaufelspitze 30). Gemäß der in Figur 1 gezeigten Ausgestaltung ist die Längsachse LA vorzugsweise parallel zu einer Aufbaurichtung des Schaufelblatts während seiner additiven Herstellung (vergleiche ebenfalls nach oben gerichteter Pfeil in Figur 4) ausgerichtet.

Das Schaufelblatt 20 weist eine Außenwand AW auf.

Das Schaufelblatt 20 weist weiterhin eine Innenwand IW auf, welche innerhalb der Außenwand angeordnet ist.

In der vereinfachten Darstellung der Figur 1, verlaufen Innenwand IW und Außenwand AW geometrisch ähnlich und äquidistant von dem Schaufelfuß 10 bis zur Schaufelspitze 30.

Im Gegensatz zur Außenwand AW, ist die Innenwand IW an der Schaufelspitze 30 weiterhin jedoch nicht geschlossen, sondern offen. Mit anderen Worten ist die Turbinenschaufel 100 an der Schaufelspitze 30 einwandig ausgestaltet.

In Figur 1 ist weiterhin zu erkennen, dass die Innenwand IW über einen Abstand A (äquidistant) von der Außenwand AW beabstandet ist, oder umgekehrt. Es ist selbstverständlich im Rahmen der vorliegenden Offenbarung vorgesehen, den Abstand entsprechend eines Kühlbedarfs oder weiteren Anforderung der Turbinenschaufel 100 beispielsweise in Längsrichtung oder Querrichtung zu variieren.

Der Abstand A zwischen der Innenwand IW und der Außenwand AW beträgt vorzugsweise zwischen 2 mm und 25 mm, besonders bevorzugt zwischen 3 und 15 mm, wie etwa 5 bis 10 mm. Alternativ kann A mehr oder weniger betragen.

Der Abstand A beträgt vorzugsweise weiterhin zwischen 5 und 10 % der Länge des zentralen Abschnitts ZA.

Zwischen Innenwand IW und Außenwand AW, genauer an einer Außenseite der Innenwand und/oder an einer Innenseite der Außenwand AW, können Turbolenzgeneratoren (nicht explizit gekennzeichnet, vgl. jedoch analog Bezugszeichen 22 weiter unten) angeordnet sein. Beispielsweise erstrecken sich die Turbulenzgeneratoren um weniger als die Hälfte des Abstandes zwischen Außenwand und Innenwand in den Strömungsquerschnitt bzw. Innenraum.

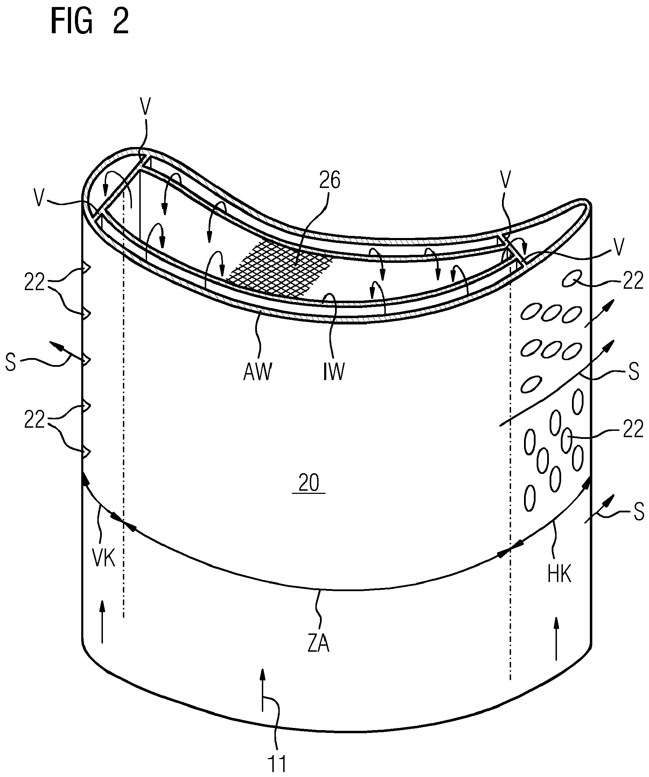

Der Abstand A bemisst einen Zwischenraum, welcher für eine Kühlung der Turbinenschaufel 100 im Betrieb derselben mit einem Kühlfluid (vgl. Bezugszeichen S in Figur 2) durchströmt werden kann, beispielsweise von einige Hundert °C warmer Kompressorluft.

Der Hohlraum oder Zwischenraum (nicht explizit gekennzeichnet) ist zumindest in dem zentralen Abschnitt ZA des Schaufelblatts 20 (vergleiche Figur 2) vorzugsweise frei von strukturellen Verbindungen zwischen der Innenwand IW und der Außenwand AW, wie in Figur 1 gekennzeichnet. Diese Ausgestaltung ermöglicht vorteilhafterweise erstens eine effiziente Kühlung, als auch, zweitens, eine einfache Pulverentfernung im Wege des partiellen Herstellungsschrittes des Schaufelblatts 20 (siehe oben).

Weiterhin ist in Figur 1 gezeigt, dass innerhalb der Innenwand eine Gitterstruktur 26 angeordnet ist.

Diese Gitterstruktur 26 kann vorzugsweise insbesondere die Innenwand IW mechanisch und/oder strukturell stützen, beispielsweise gegen mechanische Belastungen im Betrieb der Turbinenschaufel 100. Zweckmäßigerweise ist die Gitterstruktur 26 mit Öffnungen oder Hohlräumen (nicht explizit gekennzeichnet) versehen, welche im Betrieb der Turbinenschaufel 100 für eine Kühlströmung durchlässig ausgebildet sind.

Anders als in Figur 1 dargestellt, kann die Gitterstruktur 26 durchgängige Wände (ohne Öffnung) entlang der Längsachse LA des Schaufelblatts 20 aufweisen, um eine Kühlströmung nach Bedarf in Teilströmungen, welche beispielsweise fluidisch voneinander getrennt sein können, zu unterteilen. Eine solche Unterteilung kann insbesondere vorgesehen sein, um einen Kühlfluss gleichmäßig über eine Strömungs-Hinterkante des Schaufelblatts 20 austreten zu lassen (vergleiche ebenfalls rechte Seite der Abbildung der Figur 2).

Abmessungen der Öffnungen bzw. eine Maschenweite der Gitterstruktur 26 beträgt vorzugweise mindestens 5 mm, alternativ mindestens 8 mm oder mindestens 3 mm, je nach Kühlerfordernis, Größe oder Konfektionierung der Turbinenschaufel 100.

Die Schaufelspitze 30 bzw. eine entsprechende Spitzenwand 31 der Schaufel 100 wird vorzugsweise mittels eines von den bisher beschriebenen Fertigungsverfahren verschiedenen Prozesses hergestellt, vorzugsweise mittels Laserauftragschweißens. Mit Vorteil kann durch diese Ausgestaltung vorzugsweise eine Pulverentfernung beziehungsweise Entfernung überschüssigen Basismaterials, welches zwangsläufig oder inhärent während der additiven Fertigung des Schaufelblatts 20 entsteht, vor dem Aufbau oder Abschluss der Schaufelspitze 30 erfolgen.

Figur 4 deutet in diesem Zusammenhang anhand einer Schnittansicht das Prinzip eines selektiven additiven Aufbauprozesses anhand des Aufbaus der Turbinenschaufel 100 an. Die Turbinenschaufel 100 bzw. das Schaufelblatt 20 derselben ist auf einer nicht explizit gekennzeichneten Bauplatte angeordnet. Diese Bauplatte kann durch den oben beschriebenen Schaufelfuß 10 gegeben sein. Einzelne Schichten des Schaufelblatts 20 werden gemäß diesem Prozess schichtweise entlang einer Aufbaurichtung (vergleiche nach oben gerichteter Pfeil in Figur 4) und entsprechend der beispielsweise durch eine CAD-Datei vorbestimmten Geometrie des Schaufelblatts 20 selektiv und schichtweise durch eine Bestrahlungseinrichtung 25 aufgeschmolzen. Bei dieser Bestrahlungseinrichtung kann es sich um einen Laser oder einen Elektronenstrahl oder eine entsprechende Strahlquelle handeln. Dieser Energiestrahl schmilzt das Pulver 23 an den Stellen schichtweise auf, an welchen die Struktur des Schaufelblatts 20 hergestellt werden soll. Das Auftragen einer neuen Pulverschicht nach dem Bestrahlen und Verfestigen der aktuellen Schicht erfolgt durch eine Beschichtungsvorrichtung 24, beispielsweise eine Rakel.

Anders als in Figur 1 dargestellt, kann vorliegend auch vorgesehen sein, dass im Wege des additiven Aufbaus der Außenwand AW des Schaufelblatts 20 eine Seite (vergleiche Druckseite und Saugseite rechts oder links in Figur 1) entlang der Längsachse LA länger ausgebildet ist, um einen Ansatzpunkt für den abschließenden Laserauftragschweiß-Prozess bereitzustellen.

Figur 2 zeigt eine perspektivische schematische Ansicht des Schaufelblatts 20 aus Figur 1. Zusätzlich ist zu erkennen, dass das Schaufelblatt 20 an einer Strömungs-Vorderkante VK und an einer Strömungs-Hinterkante HK jeweils mit zwei Verbindungen V zwischen der additiv aufgebauten Außenwand AW und der Innenwand IW versehen ist. Diese Verbindungen V erlauben die Ausgestaltung eines Kühlkanals oder einer weiteren Kühlkammer, zur weiterhin effektiven Kühlung von Vorder- und Hinterkante, welche beispielsweise im Betrieb der Turbinenschaufel 100 besonders hoch thermisch und/oder mechanisch belastet sind. Die durch den Zwischenraum zwischen Innenwand IW und Außenwand AW geführte Kühlluft dient im Betrieb der Schaufel hauptsächlich einer Kühlung der Hauptflächen, umfassend Druck- und Saugseite, der Schaufel 100.

Zwischen der Vorderkante VK bzw. eines entsprechenden Vorderkanten-Bereichs und der Hinterkante HK bzw. eines entsprechenden Hinterkanten-Bereichs des Schaufelblatts 20 ist der zentrale Bereich ZA gekennzeichnet. In dem zentralen Bereich ZA, in welchem vorzugsweise der Schnitt aus Figur 1 vorgenommen wurde, weist das Schaufelblatt 20 vorzugweise jedoch keine, strukturellen oder mechanischen Verbindungen zwischen der Innenwand IW und der Außenwand AW auf, wie oben beschrieben, um eine Entpulverung des Zwischenraums zu erleichtern oder erst zu ermöglichen.

Eine Kühlströmung kann im Betrieb der Schaufel 100 vorzugsweise über den Schaufelfuß oder einen entsprechenden Einlass 11 (vergleiche Figur 1) in die Schaufel 100 eintreten. Diese Strömung soll dann weiterhin in den genannten Zwischenräumen an Innen- und Außenwand hochgeleitet und dann oben an der Schaufelspitze 30 ins Schaufelinnere umgeleitet werden (vgl. gebogenen Pfeile im oberen Bereich der Darstellung der Figur 2). Entsprechend kann die Strömungsführung im Betrieb der Turbinenschaufel 100 - anhand eines Längsschnitts gemäß Figur 1 betrachtet - herzförmig ausgestaltet sein. Sobald die Strömung wieder in den Innenraum oder auch in die Gitterstruktur 26, welche in Figur 2 der Einfachheit halber nicht eingezeichnet ist, eintritt, kann die Strömung S vorzugsweise durch ein (weiteres) Gitter oder eine löchrige Wand von dem zentralen Bereich in den Bereich der Vorder- oder Hinterkante gelangen, um diese Bereiche entsprechend (zusätzlich) zu kühlen. Die löchrigen Wände können beispielsweise strukturell mit den genannten Verbindungen V verbunden sein.

In Figur 2 ist weiterhin zu erkennen, dass ein in das Schaufelblatt 20 eintretender Kühlluftstrom S insbesondere nicht über Luftanschlüsse vom Schaufelfuß 10 her (an Vorderkante VK und Hinterkante HK) eingeleitet, sondern vorzugsweise zwischen Innenwand IW und Außenwand AW zunächst nach oben geleitet wird (s.o.).

In Figur 2 ist weiterhin zu erkennen, dass die Turbinenschaufel 100 an der Hinter- oder Abströmkante HK augenförmige Turbulatoren 22 aufweist. Im oberen dargestellten Teil des Schaufelblatts 20 sind die Turbulatoren 22 mit ihrer Längsachse (lange Halbachse) parallel zur Strömungsrichtung (vgl. Pfeile S) ausgerichtet. Wohingegen die eher im unteren Teil der Hinterkante HK angeordneten Turbulatoren 22 relativ zur Strömungsrichtung senkrecht bzw. mit ihrer Längsachse senkrecht zur Strömungsrichtung S ausgerichtet sind.

Da die Abströmkante HK bei üblichen Schaufelblättern 20 relativ spitz ausläuft (vergleiche rechts in Figur 2), stellt der Bereich der Hinterkante HK durch die augenförmigen Turbulatoren 22 eine große Herausforderung bezüglich der Pulverentfernung dar. Durch die Ausrichtung der Längsachsen der Turbulatoren 22, kann ein im Wege des additiven Aufbaus des Schaufelblatts 20 angesintertes Pulver beispielsweise mit einem dünnen Werkzeug entweder von der Schaufelspitze 30 her oder von den Kühlluftöffnungen, welche vorzugsweise ebenfalls im Wege des additiven Aufbaus eingebracht werden, (in Figur 2 nicht explizit gekennzeichnet) her gelockert und entfernt werden.

Figur 3 deutet schematisch Verfahrensschritte zur Herstellung der Turbinenschaufel 100 an.

Der Schaufelfuß 10 der Turbinenschaufel 100 wird dabei vorzugsweise mittels eines konventionellen Verfahrens hergestellt, beispielsweise Gießens oder Schmiedens.

Wie beschrieben, wird das Schaufelblatt 20 mittels eines additiven Verfahrens, beispielsweise selektiven Laserschmelzens oder Elektronenstrahlschmelzens hergestellt.

Die Schaufelspitze 30 wird vorzugsweise mittels Laserauftragschweißens hergestellt.

Die Erfindung ist nicht durch die Beschreibung anhand der Ausführungsbeispiele auf diese beschränkt, sondern umfasst jedes neue Merkmal sowie jede Kombination von Merkmalen. Dies beinhaltet insbesondere jede Kombination von Merkmalen in den Patentansprüchen, auch wenn dieses Merkmal oder diese Kombination selbst nicht explizit in den Patentansprüchen oder Ausführungsbeispielen angegeben ist.

## Patentansprüche

1. Turbinenschaufelblatt (20), welches eine sich entlang einer Längsachse (LA) einer Turbinenschaufel (100) von einem radial inneren Bereich bis zu einem radial äußeren Bereich erstreckt, wobei das Schaufelblatt (20) weiterhin eine Außenwand (AW) und eine innerhalb der Außenwand angeordnete Innenwand (IW) aufweist und wobei das Schaufelblatt (20) in einem zentralen Abschnitt frei von strukturellen Verbindungen zwischen der Außenwand (AW) und der Innenwand (IW) ist, und wobei die Turbinenschaufel (100) an einer Schaufelspitze (30) an dem radial äußeren Bereich einwandig ausgestaltet ist.

2. Turbinenschaufelblatt (20) gemäß Anspruch 1, wobei die Innenwand (IW) und die Außenwand (AW) einen Strömungskanal (S) definieren, um insbesondere eine Oberfläche des Schaufelblatts (20) im Betrieb der Turbinenschaufel (100) zu kühlen.

3. Turbinenschaufelblatt (20) gemäß Anspruch 1 oder 2, wobei das Schaufelblatt (20) durch ein additives Herstellungsverfahren, beispielsweise selektives Laserschmelzen oder Elektronenstrahlschmelzen hergestellt oder herstellbar ist.

4. Turbinenschaufelblatt (20) gemäß Anspruch 3, wobei der Strömungskanal (S) weiterhin derart ausgebildet ist, dass eine Entfernung eines Basismaterials (23) aus einem Zwischenraum zwischen der Innenwand (IW) und der Außenwand (AW) ohne weiteres möglich ist.

5. Turbinenschaufelblatt (20) gemäß einem der vorherigen Ansprüche, wobei ein Abstand (A) zwischen der Innenwand (IW) und der Außenwand (AW) zwischen 2 mm und 25 mm beträgt.

6. Turbinenschaufelblatt (20) gemäß einem der vorherigen Ansprüche, wobei ein Abstand (A) zwischen der Innenwand (IW) und der Außenwand (AW) zwischen 5 und 10 % der Länge des zentralen Abschnitts (ZA) beträgt.

7. Turbinenschaufelblatt (20) gemäß einem der vorherigen Ansprüche, wobei die Innenwand (IW) in dem zentralen Abschnitt (ZA) durch eine Gitterstruktur (26) gestützt wird.

8. Turbinenschaufelblatt (20) gemäß Anspruch 7, wobei die Gitterstruktur (26) Öffnungen definiert, welche während eines Betriebs der Turbinenschaufel (100) für eine Kühlströmung (S) durchlässig ausgebildet sind.

9. Turbinenschaufelblatt (20) gemäß Anspruch 7 oder 8, wobei die Gitterstruktur (26) derart ausgebildet ist, dass eine Kühlströmung (S) während eines Betriebs der Turbinenschaufel (100) in eine Mehrzahl von Teilströmungen aufgeteilt wird.

10. Turbinenschaufelblatt (20) gemäß Anspruch 8 oder 9, wobei die Öffnungen Abmessungen von mindestens 5 mm aufweisen.

11. Turbinenschaufelblatt (20) gemäß einem der vorherigen Ansprüche, wobei der zentrale Abschnitt (ZA) des Schaufelblattes (20) zwischen einer Strömungs-Vorderkante (VK) und einer Strömungs-Hinterkante (HK) desselben angeordnet ist, und wobei Innenwand (IW) und Außenwand (AW) an der Strömungs-Vorderkante (VK) und/oder der Strömungs-Hinterkante (HK) zumindest teilweise strukturell verbunden sind.

12. Turbinenschaufelblatt (20) gemäß einem der vorherigen Ansprüche, welche an einer Strömungs-Hinterkante (HK), insbesondere augenförmige, Turbulenzgeneratoren aufweist (22).

13. Turbinenschaufel (100) umfassend ein Schaufelblatt (20) gemäß einem der vorherigen Ansprüche, welche weiterhin einen Schaufelfuß (10) aufweist, welcher das Schaufelblatt (20) trägt, wobei der Schaufelfuß (10) durch konventionelle Verfahren hergestellt ist.

14. Turbinenschaufel (100) gemäß Anspruch 13, wobei die Schaufelspitze (30) bzw. deren Wand mittels Laserauftragschweißens, insbesondere aus einem Material, welches im Vergleich zu dem Schaufelblattmaterial eine höhere Oxidationsstabilität aufweist, hergestellt ist.

15. Verfahren zur Herstellung der Turbinenschaufel (100) gemäß einem der vorherigen Ansprüche, wobei ein Schaufelfuß (10) der Turbinenschaufel (100) mittels eines konventionellen Verfahrens hergestellt wird, das Schaufelblatt (20) mittels eines additiven Verfahrens, beispielsweise selektiven Laserschmelzens oder Elektronenstrahlschmelzens hergestellt wird, und die Schaufelspitze (30) mittels Laserauftragschweißens hergestellt wird.
